# EUROPEAN PATENT SPECIFICATION

(11) **EP 2 736 706 B1**
(45) Date of publication and mention of the grant of the patent: **28.12.2016**
(21) Application number: 12745445.2
(22) Date of filing: 27.07.2012
(51) Int. Cl.: B32B 37/10, B29C 70/46, B29C 70/44

(54) **A DEVICE FOR THE MANUFACTURE OF A BONDED COMPONENT AND ALSO A METHOD**
VORRICHTUNG ZUR HERSTELLUNG EINER GEBUNDENEN KOMPONENTE UND VERFAHREN DAFÜR
DISPOSITIF POUR LA FABRICATION D'UN COMPOSANT LIÉ ET PROCÉDÉ DE FABRICATION

(30) Priority: 27.07.2011 DE 102011079931; 27.07.2011 US 201161512003 P
(43) Date of publication of application: 04.06.2014
(73) Proprietor: Airbus Operations GmbH, 21129 Hamburg (DE)
(72) Inventor: BARDENHAGEN, Heinz, 21680 Stade (DE); SUESSMUTH, Karsten, 21682 Stade (DE)
(74) Representative: Kopf Westenberger Wachenhausen Patentanwälte PartG mbB
(86) International application number: PCT/EP2012/064834
(87) International publication number: WO 2013/014289

(56) References cited:
- WO-A1-2010/015783
- US-A1- 2010 098 906
- US-A1- 2010 098 927
- US-B1- 6 620 369

## Description

The invention concerns a device for the manufacture of a bonded component with fibre-reinforced plastics with at least one base moulding tool and at least one moulding tool, wherein the bonded component is arranged between the base moulding tool and the moulding tool and the bonded component has at least one base laminate and at least one reinforcement laminate, and the moulding tool is covered with an aeration material and with a vacuum envelope, wherein the vacuum envelope is sealed with respect to the base moulding tool.

For components in which high specific strengths and stiffnesses are required per unit weight, as, for example, in aerospace applications, fibre-reinforced plastics (FRPs) are often deployed. A fibre-reinforced plastic is a material that is formed with a multiplicity of reinforcement fibres that are embedded in a plastic matrix material. At the present time carbon fibres, glass fibres, aramide^{®} fibres, natural fibres, or similar, are deployed as the reinforcement fibres. As a rule the matrix material consists of thermosetting plastics, such as, for example, epoxy resins, polyester resins, phenol resins, or bismaleimide resins (so-called BMI resins). In principle the bonded components can be manufactured with reinforcement fibres that are already pre-impregnated with matrix material (so-called prepreg material), and/or with reinforcement fibres, i.e. fibre products with a suitable geometry, which are only infiltrated, i.e. impregnated, with the matrix material immediately before the curing process.

Complex, integral fibre-reinforced plastic structures usually consist of at least one base laminate with a multiplicity of reinforcing and connecting elements. These elements can be available as fibre-reinforced plastic components that have already been consolidated, as components made of other materials, and also as fibre-reinforced plastic laminates. Fibre-reinforced plastic laminates consist of two or more layers of reinforcement fibres that have been pre-impregnated with a matrix material, and which have not yet been cured. The reinforcement fibres can be available as a unidirectional layer, a woven fabric, a knitted fabric, or as a multilayer mat. The layers usually have differing primary fibre directions with a course that is preferably aligned with the forces that are occurring.

One variant for the design of components from fibre-reinforced plastic is, for example, a large-format shell with longitudinal stiffeners, in particular I-stringers, or stringers with other cross-sectional geometries, in an integral form of construction. These are constructed from at least one base laminate and reinforcement laminates, such as, for example, stringer laminates, and also partial reinforcements and other features as required.

Shells stiffened with I-stringers in an integral form of construction are components that are often curved in at least one spatial direction. Through the design of the base laminate, the use of reinforcements and insulation material, and also the addition of other elements, components of complex shape ensue, with very different thicknesses and contours between sections. Such shell components find application, for example, in the manufacture of lifting surfaces, ailerons, landing flaps, elevator units, vertical tail units, fuselage shells, or similar items, for the production of aircraft.

For the manufacture of a shell component with integral reinforcement elements, such as, for example, stringers, the stringer laminates are laid down in accordance with a procedure of known prior art - here cited in an exemplary manner - on moulding tools provided with means of release, and are shaped on the latter. In an intermediate step a base laminate is laid down on a base moulding tool similarly provided with means of release, and is aligned on the latter. The moulding tools are then brought together, spatially aligned, and together are laid down as a unit on the base laminate. The whole arrangement is then provided with a vacuum generation system and the device thus created is placed in an autoclave for purposes of full curing at high pressure and temperatures of up to 220°C. The removal of the bonded component from the device represents the final production step.

Voids represent a major difficulty in the production of integrally reinforced shells; these are already present within the device, or occur only during the curing process. Matrix material can penetrate into these voids; in turn this leads to a reduction of the material thickness of other parts of the shell, i.e. of the bonded component. Bonded components, whose material thickness is significantly less than a prescribed value less a tolerance, which is a rule is small, must usually undergo complex further treatment, which leads to significant extra costs.

A multiplicity of effects are responsible for the occurrence or existence of such cavities. Thus, for example, during the curing process the cavity formed by the moulding tools and the overlying vacuum generation system is filled with the fibre-reinforced plastic that has been introduced, in particular with its matrix material. In addition to the form-defining cavity that is required for the design of the bonded component, further undesirable cavities are present. These voids essentially ensue as a result of gaps and/or capillaries between the individual moulding tools. Furthermore empty spaces ensue as a result of volumes underneath the moulding tools that are not filled, as caused by deviations of size and/or location of the laminates, deviations of size and/or location of the moulding tools, and also the thermal expansion of the moulding tools during the curing process. In the event of a temperature variation of 160°C a moulding tool made of an aluminium alloy and with a length of 4 m, experiences, for example, an expansion of approx. 15 mm. Furthermore undesirable voids can also form within the vacuum generation system, for example as a result of a vacuum envelope that is not fully attached.

Further prior art is known from WO2010015783A1, US2010/0098927A, DE2917344A1, DE60315054T2, and US5281388A

The object of the invention is therefore to create a device and also a method for the production of large-format components that are spatially of complex shape and integrally reinforced with fibre-reinforced plastics using moulding tools exhibiting high thermal expansion, in which undesirable cavities only occur to a significantly reduced extent.

This object is achieved in the first instance by means of a device with the features of Claim 1.

In that at least one filler element is fitted to each of the two end faces of the base laminate in an essentially gap-free manner, the increasing level of projection of the bonded component laminates as a result of the severe expansion of the moulding tools during the heating phase of the curing process no longer leads to voids into which uncontrolled matrix material can penetrate. In addition the filler elements serve as supports for the moulding tools and by this means reduce their level of bending, in particular under high pressures in autoclaves. Thereby, both end sections of the at least one moulding tool rest on the filler elements, at least in some regions. By this means, amongst other factors, any downwards bending of the end sections of the moulding tools projecting beyond the laminates on both sides is avoided, if the device is subjected to a high ambient pressure, such as, for example, in an autoclave during the curing process of the bonded component. Additionally, at least one sealing element is inserted between each of the filler elements and the end faces of the base laminate in an essentially gap-free manner. As a consequence of the edge sealing of the bonded component with the aid of the sealing elements, a possible transfer of matrix material into the vacuum generation system, i.e. into the voids formed by the vacuum generation system, is reduced. Furthermore the sealing elements enable a reduction of possible voids as a result of any deviations of location and/or size of the laminates, and also of the moulding tools. The sealing elements are positioned in a gap-free manner between the two end faces of the base laminate and the filler elements. Reinforcement laminates, such as, for example, stringer laminates with the associated moulding tools, do not lead to any conflict, because the sealing elements are compressed and/or displaced as required.

In accordance with an advantageous configuration of the device the at least one moulding tool in particular exhibits high thermal expansion.

The insensitivity of the device to moulding tools exhibiting high thermal expansion, as provided by the filler elements and also the sealing elements, enables the use of cost-effective moulding tools made of aluminium alloys.

In accordance with a further development of the device a material thickness of the at least one filler element and of the at least one sealing element approximately corresponds in each case to a material thickness of the base laminate and the reinforcement laminate.

By this means the at least one moulding tool is provided with support over as much surface area as possible by the laminates, the sealing elements and the filler elements.

Further, the filler elements are formed from a metallic material. This ensures that the filler elements durably withstand the extreme ambient conditions that prevail in the autoclave during the curing process. The filler elements can, for example, be formed from an aluminium alloy, a titanium alloy, or a stainless steel alloy.

In accordance with a further development of the device the at least one sealing element is formed from an elastic material, in particular from a mixture of rubber and cork.

By virtue of this mixture sufficient pressure and temperature stability is provided in the first instance. In addition the material mixture cited has a sufficiently high elasticity - in particular to compensate for layers missing from the laminates within the device, and/or dimensional deviations of the laminates.

In accordance with a further advantageous configuration provision is made that each of the filler elements and the sealing elements has an approximately rectangular cross-sectional geometry.

As a consequence of this geometrical configuration seating between the moulding tools and the base moulding tool ensues over a large surface area. In addition this design permits the simple manufacture of filler elements and sealing elements by the manufacture of sections of the required length from "continuous" semi-finished products.

In addition the inventive object is achieved by means of a method in accordance with Claim 6, according to which a bonded component with fibre-reinforced plastics is manufactured, in particular using the device in accordance with one of the Claims 1 to 5.

In the course of the inventive method at least one base laminate is placed and aligned on the base moulding tool in the first instance. At least one sealing element is then arranged in the region of each of the two end faces of the base laminate in an essentially gap-free manner. At least two filler elements are then likewise applied onto the two sealing elements in an essentially gap-free manner. In an intermediate step preformed reinforcement laminates with the associated moulding tools are then laid down on the base laminate. After that the moulding tools are provided with a release layer, which is overlaid with an aeration material. The whole assembly is then covered with a vacuum envelope to complete the device. The vacuum envelope can be subjected to a reduced pressure via at least one vacuum channel with at least one perforated covering accommodated therein. For purposes of curing the bonded component, formed from the at least one base laminate and the at least one reinforcement laminate, by the application of pressure and temperature, the whole device is placed in an autoclave.

In the drawings:
- Fig. 1: shows a cross-sectional representation through an arrangement of known prior art for the production of components of fibre-reinforced plastic, which leads to undesirable voids.
- Fig. 2: shows a longitudinal section through the arrangement in accordance with Fig. 1 along the section line II - II in Fig. 1,
- Fig. 3: shows a schematic longitudinal section through the inventive device for purposes of reducing the voids that are caused by thermal expansion, amongst other factors, and
- Fig. 4: shows the device in accordance with the longitudinal section in Fig. 3 with voids as a consequence of, in particular, incorrectly positioned laminates.

In the drawings the same design elements have the same reference numbers in each case.

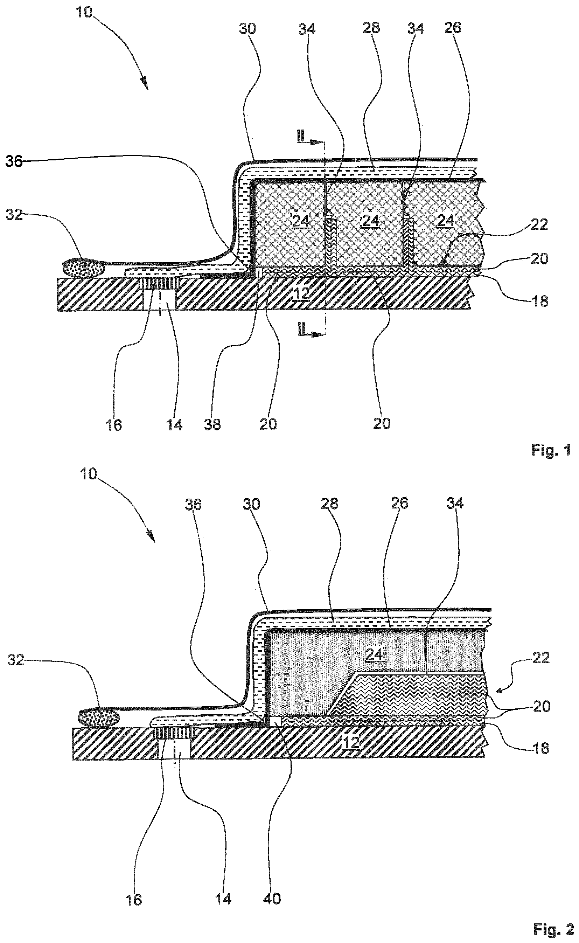

Fig. 1 shows a schematic cross-section through an arrangement of known prior art for the manufacture of components of fibre-reinforced plastic, while Fig. 2 - to which reference is made at the same time - illustrates a simplified longitudinal section through the arrangement in accordance with the section line II-II in Fig. 1.

The arrangement 10 comprises, amongst other items, a base moulding tool 12 with a vacuum channel 14 with a perforated covering 16. On the base moulding tool 12 is located a base laminate 18, on which three reinforcement laminates 20 are laid down; together these form the bonded component 22. The spatial geometry of the reinforcement laminates 20 is here defined by means of three moulding tools 24, i.e. cores. On the moulding tools 24 runs a release layer 26, which for its part is covered with an aeration material 28, i.e. an aeration mat. The aeration material 28 is for its part covered with a vacuum envelope 30, which by means of a seal 32 is sealed in a gas-tight manner with respect to the base moulding tool 12 and forms a vacuum generation system that is not designated. The at least one base laminate 18 and also the reinforcement laminates 20 are formed from a fibre-reinforced plastic. A prepreg material made up from an epoxy resin reinforced with carbon fibres can, for example, find application as the fibre-reinforced plastic. As a result of the effects elucidated in the introduction undesirable voids exist, or form during the curing process of the bonded component 22 - in which the whole arrangement 10 is usually placed in an autoclave, and a reduced pressure prevails within the vacuum envelope 30, at least for some of the time.

As can be seen from Figs. 1, 2, two voids 34 exist in each case between the moulding tools 24, and a further void 36 in the form of a gusset is located underneath the aeration material 28 within the vacuum generation system. The other voids 38, 40 are to be attributed to, amongst other factors, thermal expansion effects of the moulding tools 24 and/or the base moulding tool 12 in the course of the curing process in the autoclave. In particular matrix material can penetrate into the voids 34, 38, 40, as a result of which a material thickness of the bonded component 22 can be reduced to the extent that this, less the prescribed tolerance, lies below a limiting value, and complex rework is required in order to bring the bonded component 22 up to the required minimum design thickness.

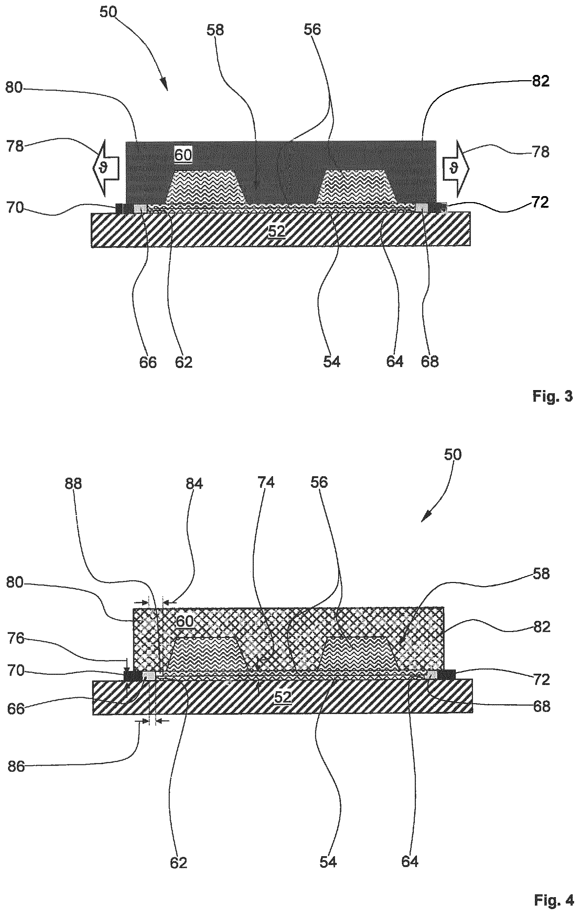

Fig. 3 and Fig. 4 - to which reference is made at the same time in the further course of the description - in a presentation of the principles illustrate a schematic longitudinal section through an inventively configured device for purposes of extensively reducing cavities caused by thermal expansion as well as for purposes of reducing voids as a result of deviations in the locations of the laminates. In the interests of improving the clarity of the drawing the vacuum generation system is not represented in Figs. 3, 4.

A device 50 comprises, amongst other items, a base moulding tool 52, on which rest at least one base laminate 54 and one reinforcement laminate 56, such as, for example, a stringer laminate. The base laminate 54 and the reinforcement laminate 56 together form the bonded component 58 that is to be produced; this is formed with fibre-reinforced plastics, and as a rule takes the form of a shell with integral reinforcement. The bonded component 58 is covered with at least one forming, i.e. form-defining moulding tool 60, which in comparison to the base moulding tool 52 exhibits high thermal expansion. The moulding tool 60 can, for example, be formed from an aluminium alloy, while the base moulding tool 52 is manufactured from a steel alloy or a stainless steel alloy. At least one sealing element 66, 68 and also at least one filler element 70, 72 is fitted to each of the two end faces 62, 64 of the base laminate 54, at least in some sections, in an essentially gap-free manner. Both the sealing elements 66, 68 and also the filler elements 70, 72 have an approximately rectangular cross-sectional geometry. A material thickness 74 of the base laminate 54 and the reinforcement laminate 56 together approximately correspond to a material thickness 76 of the sealing elements 66, 68 and/or the filler elements 70, 72.

The sealing elements 66, 68 are preferably manufactured from a mixture of cork and rubber. The filler elements 70, 72 are formed from a metallic material, which can withstand the pressure and temperature conditions prevailing in the autoclave. The filler elements 70, 72 can consist of an aluminium alloy, a titanium alloy, a steel alloy, or a stainless steel alloy.

In the further course of the description reference is first made to Fig. 3. Even in the event of severe thermal expansion 78 of the moulding tool 60 - such as usually occurs in the autoclave during the curing process - both end sections 80, 82 of the (upper) moulding tool 60 rest on the filler elements 70, 72, at least in some regions. Accordingly the increasing level of projection of the laminates 54, 56, i.e. of the bonded component 58, as a result of the expansion of the moulding tool 60 during the heating phase in the autoclave, no longer leads to voids. In addition the filler elements 70, 72 serve as supports for the moulding tool 60 on both sides and by this means reduce its (cantilevered) bending downwards as a result of the high pressure prevailing in the autoclave.

On the basis of the representation in Fig. 4 the sealing elements 66, 68 reduce any possible transfer of matrix material into the vacuum generation system, not represented here, i.e. into the voids formed by the vacuum generation system. Furthermore the sealing elements 66, 68 achieve a reduction of any voids as a result of deviations of location and/or size 84, 86 of the laminates 54, 56 and of the moulding tool 60. Thus, for example, the volume of a cavity 88 as a consequence of a horizontal location error (displacement) of the reinforcement laminate 56 is limited by means of the sealing elements 66, and by this means its undesirable ability to accommodate matrix material from the bonded component 58 is at least reduced. The sealing elements 66, 68 are preferably applied, i.e. positioned, onto the base laminate 54 in a gap-free manner after the base laminate 54 has been laid down on the base moulding tool 52. The reinforcement laminates 56, supported, at least in some sections, on the sealing elements 66, 68, after application as required, do not lead to any conflict, since the sealing elements 66, 68 can be compressed and/or displaced by virtue of their elasticity.

The thermal expansion 78 (cf. Fig. 3) in the longitudinal direction of the device 50 as shown, is very much greater than the thermal expansion transverse to the longitudinal direction (at right angles to the plane of the drawing), not represented, because a length of the device 50 of, for example, 5 m is significantly greater than its width of, for example, 0.5 m. Nevertheless filler elements and/or sealing elements can also be provided on at least one longitudinal face of the laminates 54, 56 within the device 50, at least in some sections, in order to achieve the above-elucidated effects, in particular in the form of a reduction of voids.

The sequence of the inventive method for the manufacture of a complex shaped component with fibre-reinforced plastics, for example of an integrally reinforced shell component of CFRP, will be elucidated in more detail in what follows with the aid of Figs. 3, 4. At least one base laminate 54 is laid down on the base moulding tool 52 in the first instance. After that the sealing elements 66, 68 and also the filler elements 70, 72 are applied to the end faces 62, 64 of the base laminate 54 in a manner that is as free of gaps as possible. The at least one reinforcement laminate 56 together with the associated form-defining moulding tool 60, i.e. core, is then laid down on the base laminate 54. The arrangement thus created is provided with a conventional vacuum generation system, not represented, which is preferably formed with at least one release layer, at least one aeration layer running over the latter, and one vacuum envelope closing everything off from the external environment. In addition the vacuum generation system can have further layers, such as, for example, layers for the removal of resin by suction, or tear-off layers. Furthermore fixing means, such as, for example, adhesive tapes or similar, are necessary in order to secure the above-mentioned elements on the base moulding tool 52 and to prevent slippage of the elements relative to one another. The space underneath the vacuum envelope is then at least partially evacuated via a vacuum channel with a perforated covering. The device 50 thus formed is then placed in an autoclave, in which the curing of the laminates 54, 56 to form a finished bonded component 58 takes place with the simultaneous application of pressure and temperature. During the curing process in the autoclave the reduced pressure within the vacuum envelope can be reduced with time to the extent that normal ambient air pressure prevails in the latter.

### Reference symbol list

- 10.: Arrangement
- 12.: Base moulding tool
- 14.: Vacuum channel
- 16.: Perforated covering
- 18.: Base laminate
- 20.: Reinforcement laminate
- 22.: Bonded component
- 24.: Moulding tool
- 26.: Release layer
- 28.: Aeration material
- 30.: Vacuum envelope
- 32.: Seal
- 34.: Void (moulding tool)
- 36.: Void (vacuum generation system)
- 38.: Void
- 40.: Void
- 50.: Device
- 52.: Base moulding tool
- 54.: Base laminate
- 56.: Reinforcement laminate
- 58.: Bonded component
- 60.: Moulding tool
- 62.: End face (base laminate)
- 64.: End face (base laminate)
- 66.: Sealing element
- 68.: Sealing element
- 70.: Filler element
- 72.: Filler element
- 74.: Material thickness
- 76.: Material thickness
- 78.: Thermal expansion
- 80.: End section
- 82.: End section
- 84.: Location deviation (laminate)
- 86.: Size deviation (laminate)
- 88.: Cavity

## Claims

1. A device (50) for the manufacture of a bonded component (58) with fibre-reinforced plastics with at least one base moulding tool (52) and at least one moulding tool (60), wherein
the bonded component (58) is arranged between the base moulding tool (52) and the moulding tool (60), and the bonded component (58) has at least one base laminate (54) and at least one reinforcement laminate (56), and the moulding tool (60) is covered with an aeration material and with a vacuum envelope, wherein
the vacuum envelope is sealed with respect to the base moulding tool (52),
wherein
at least one filler element (70, 72) formed from a metallic material is provided to be fitted to each of the two end faces (62, 64) of the base laminate (54), wherein the at least one moulding tool (60) with the two end sections (80, 82) rests on the filler elements (70, 72) at least in some regions, and wherein at least one sealing element (66, 68), compressible and displaceable by virtue of its elasticity, is provided to be inserted in each case between the filler elements (70, 72) and the end faces (62, 64) of the base laminate (54) in an essentially gap-free manner.

2. The device (50) in accordance with one of the Claim 1,
**characterised in that**,
in particular the at least one moulding tool (60) exhibits high thermal expansion such as an aluminium alloy

3. The device (50) in accordance with one of the Claims 1 to 2,
**characterised in that**,
a material thickness (76) of the at least one filler element (70, 72) and the at least one sealing element (66, 68) in each case approximately corresponds to a material thickness (74) of the base laminate (54) and the reinforcement laminate (56),
wherein the filler elements (70, 72) serve as supports for the moulding tool (60) on both sides.

4. The device (50) in accordance with one of the Claims 1 to 3,
**characterised in that**,
the at least one sealing element (66, 68) is formed from an elastic material, in particular from a mixture of rubber and cork.

5. The device (50) in accordance with one of the Claims 1 to 4,
**characterised in that**,
the filler elements (70. 72) and the sealing elements (66, 68) have in each case an approximately rectangular cross-sectional geometry.

6. A method for the manufacture of a bonded component (58) with fibre-reinforced plastics having at least one base laminate (54) and at least one reinforcement laminate (56), using the device (50) in accordance with one of the Claims 1 to 5, wherein at least one filler element (70, 72) formed from a metallic material is fitted to each of the two end faces (62, 64) of the base laminate (54) in an essentially gap-free manner, and at least one moulding tool (60) with the two end sections (80, 82) rests on filler elements (70, 72) at least in some regions, and wherein at least one sealing element (66, 68), compressible and displaceable by virtue of its elasticity, is inserted in each case between the filler elements (70, 72) and the end faces (62, 64) of a base laminate (54) in an essentially gap-free manner.

## Patentansprüche

1. Vorrichtung (50) zur Herstellung eines Klebebauteils (58) mit faserverstärkten Kunststoffen mit mindestens einem Basisformwerkzeug (52) und mindestens einem Formwerkzeug (60),
wobei das Klebebauteil (58) zwischen dem Basisformwerkzeug (52) und dem Formwerkzeug (60) angeordnet ist, und das Klebebauteil (58) mindestens ein Basislaminat (54) und mindestens ein Verstärkungslaminat (56) aufweist, und das Formwerkzeug (60) mit einem Belüftungsmaterial und mit einer Vakuumhülle bedeckt ist,
wobei die Vakuumhülle gegenüber dem Basisformwerkzeug (52) abgedichtet ist,
wobei an beiden Stirnseiten (62, 64) des Basislaminates (54) jeweils mindestens ein Füllkörper (70, 72) aus metallischem Material anliegt,
wobei das mindestens eine Formwerkzeug (60) mit beiden Endabschnitten (80, 82) zumindest bereichsweise auf den Füllkörpern (70, 72) aufliegt,
wobei mindestens ein Dichtkörper (66, 68), der aufgrund seiner Elastizität komprimiert und/oder verdrängt werden kann, jeweils zwischen den Füllkörpern (70, 72) und den Stirnseiten (62, 64) des Basislaminates (54) im Wesentlichen spaltfrei eingefügt ist.

2. Vorrichtung (50) nach Anspruch 1, **dadurch gekennzeichnet, dass** insbesondere das mindestens eine Formwerkzeug (60) eine hohe Wärmeausdehnung wie beispielsweise eine Aluminiumlegierung aufweist.

3. Vorrichtung (50) nach einem der Patentansprüche 1 bis 2, **dadurch gekennzeichnet, dass** eine Materialstärke (76) des mindestens einen Füllkörpers (70, 72) und des mindestens einen Dichtkörpers (66, 68) jeweils in etwa einer Materialstärke (74) des Basislaminates (54) und des Verstärkungslaminates (56) entspricht, wobei die Füllkörper (70, 72) als beidseitige Auflager für das Formwerkzeug (60) dienen.

4. Vorrichtung (50) nach einem der Patentansprüche 1 bis 3, **dadurch gekennzeichnet, dass** der mindestens eine Dichtkörper (66, 68) mit einem elastischen Material, insbesondere mit einem Gemisch aus Gummi und Kork, gebildet ist.

5. Vorrichtung (50) nach einem der Patentansprüche 1 bis 4, **dadurch gekennzeichnet, dass** die Füllkörper (70, 72) und die Dichtkörper (66, 68) jeweils eine in etwa rechteckförmige Querschnittsgeometrie aufweisen.

6. Verfahren zur Herstellung eines Klebebauteils (58) mit faserverstärkten Kunststoffen und mit mindestens einem Basislaminat (54) und mindestens einem Verstärkungslaminat (56), unter Verwendung der Vorrichtung (50) nach einem der Patentansprüche 1 bis 5, wobei an beiden Stirnseiten (62, 64) des Basislaminates (54) jeweils mindestens ein Füllkörper (70, 72) aus metallischem Material im Wesentlichen spaltfrei angelegt wird, wobei das mindestens eine Formwerkzeug (60) mit beiden Endabschnitten (80, 82) zumindest bereichsweise auf den Füllkörpern (70, 72) aufliegt, wobei mindestens ein Dichtkörper (66, 68), der aufgrund seiner Elastizität komprimiert und/oder verdrängt werden kann, jeweils zwischen den Füllkörpern (70, 72) und den Stirnseiten (62, 64) des Basislaminates (54) im Wesentlichen spaltfrei eingefügt wird.

## Revendications

1. Dispositif (50) de fabrication d'un composant assemblé (58) avec des plastiques renforcés de fibres à l'aide d'au moins un outil de moulage de base (52) et d'au moins un outil de moulage (60), dans lequel
le composant assemblé (58) est agencé entre l'outil de moulage de base (52) et l'outil de moulage (60), et le composant assemblé (58) présente au moins un stratifié de base (54) et au moins un stratifié de renforcement (56), et l'outil de moulage (60) est recouvert d'un matériau d'aération et d'une enveloppe sous vide, dans lequel
l'enveloppe sous vide est scellée par rapport à l'outil de moulage de base (52), dans lequel
au moins un élément de remplissage (70, 72) formé à partir d'un matériau métallique est prévu pour être rapporté sur chacune des deux faces d'extrémité (62, 64) du stratifié de base (54), dans lequel l'au moins un outil de moulage (60) avec les deux sections d'extrémité (80, 82) repose sur les éléments de remplissage (70, 72) au moins dans certaines régions, et dans lequel au moins un élément de scellement (66, 68), compressible et déplaçable en raison de son élasticité, est prévu pour être inséré dans chaque cas entre les éléments de remplissage (70, 72) et les faces d'extrémité (62, 64) du stratifié de base (54) de manière sensiblement sans espace.

2. Dispositif (50) selon la revendication 1,
**caractérisé en ce que**, en particulier, l'au moins un outil de moulage (60) présente une dilatation thermique élevée tel qu'un alliage d'aluminium.

3. Dispositif (50) selon une des revendications 1 à 2,
**caractérisé en ce qu'**une épaisseur de matériau (76) de l'au moins un élément de remplissage (70, 72) et de l'au moins un élément de scellement (66, 68), dans chaque cas, correspond approximativement à une épaisseur de matériau (74) du stratifié de base (54) et du stratifié de renforcement (56),
dans lequel les éléments de remplissage (70, 72) servent de supports pour l'outil de moulage (60) sur les deux côtés.

4. Dispositif (50) selon une des revendications 1 à 3,
**caractérisé en ce que** l'au moins un élément de scellement (66, 68) est formé à partir d'un matériau élastique, en particulier à partir d'un mélange de caoutchouc et de liège.

5. Dispositif (50) selon une des revendications 1 à 4,
**caractérisé en ce que** les éléments de remplissage (70, 72) et les éléments de scellement (66, 68) présentent dans chaque cas une géométrie en coupe transversale approximativement rectangulaire.

6. Procédé de fabrication d'un composant assemblé (58) avec des plastiques renforcés de fibres présentant au moins un stratifié de base (54) et au moins un stratifié de renforcement (56), à l'aide du dispositif (50) selon une des revendications 1 à 5, dans lequel au moins un élément de remplissage (70, 72) formé à partir d'un matériau métallique est rapporté sur chacune des deux faces d'extrémité (62, 64) du stratifié de base (54) de manière sensiblement sans espace, et au moins un outil de moulage (60) avec les deux sections d'extrémité (80, 82) repose sur les éléments de remplissage (70, 72) au moins dans certaines régions, et dans lequel au moins un élément de scellement (66, 68), compressible et déplaçable en raison de son élasticité, est inséré dans chaque cas entre les éléments de remplissage (70, 72) et les faces d'extrémité (62, 64) d'un stratifié de base (54) de manière sensiblement sans espace.
